# EUROPÄISCHE PATENTSCHRIFT

(11) **EP 0 932 514 B1**
(45) Veröffentlichungstag und Bekanntmachung des Hinweises auf die Patenterteilung: **05.12.2001**
(21) Anmeldenummer: 97911180.4
(22) Anmeldetag: 06.10.1997
(51) Int. Cl.: B60H 1/00, B60H 3/06, B60H 1/24

(54) **LÜFTUNGSEINRICHTUNG FÜR EIN KRAFTFAHRZEUG**
VENTILATION DEVICE FOR A MOTOR VEHICLE
DISPOSITIF DE VENTILATION POUR VEHICULE AUTOMOBILE

(30) Priorität: 21.10.1996 DE 19643285
(43) Veröffentlichungstag der Anmeldung: 04.08.1999
(73) Patentinhaber: Mannesmann VDO Aktiengesellschaft, 60388 Frankfurt am Main (DE)
(72) Erfinder: DÖHRING, Klaus, D-63741 Aschaffenburg (DE)
(74) Vertreter: Klein, Thomas, Dipl.-Ing. (FH)
(86) Internationale Anmeldenummer: EP9705477
(87) Internationale Veröffentlichungsnummer: WO9817489

(56) Entgegenhaltungen:
- DE-A- 3 813 548
- US-A- 5 167 129
- US-A- 5 261 855

## Beschreibung

Die Erfindung betrifft eine Lüftungseinrichtung für ein Kraftfahrzeug mit einem Luftfilter, mit einem Gebläse und mit mehreren, mit dem Gebläse verbindbaren, zur Belüftung des Kraftfahrzeuges vorgesehenen Belüftungsöffnungen, welche in einem mittleren Bereich und in einem seitlichen Bereich einer Armaturentafel angeordnet sind.

Solche Lüftungseinrichtungen werden in heutigen Kraftfahrzeugen häufig eingesetzt und sind damit bekannt. Dabei hat die Lüftungseinrichtung in der Regel eine Vielzahl von Belüftungsöffnungen im oder in der Nähe der Armaturentafel und in einem Fußraum des Kraftfahrzeuges. Die Lüftungseinrichtung saugt durch eine an der Außenseite des Kraftfahrzeuges angeordnete Frischluftöffnung Frischluft an und fördert sie mittels des Gebläses zu den im Kraftfahrzeug angeordneten Belüftungsöffnungen. Häufig kann man mit einer Umschaltklappe Frischluft von der Frischluftöffnung in das Kraftfahrzeug fördern oder das Gebläse auf eine Umluftförderung schalten, bei der die Luft im Fußraum des Kraftfahrzeuges angesaugt und über den Luftfilter zu den Belüftungsöffnungen in der Armaturentafel gefördert wird. Auch ist es bekannt, daß zumindest einzelne Belüftungsöffnungen unter Umgehung des Gebläses direkt mit einer an der Außenseite des Kraftfahrzeugs angeordneten Frischluftöffnung verbindbar und bei einer Vorwärtsbewegung des Fahrzeugs unmittelbar mit Frischluft beaufschlagbar sind.

Nachteilig bei der bekannten Lüftungseinrichtung ist, daß es in der Regel sehr lange dauert, bis die verbrauchte Luft im Kraftfahrzeug ausgetauscht ist. Insbesondere bei einem rauchenden Insassen im vorderen Bereich des Fahrzeugs entsteht die verbrauchte Luft in der Nähe oder oberhalb der Armaturentafel und wird bei der bekannten Lüftungseinrichtung von der durch die Belüftungsöffnungen der Armaturentafel eingeblasenen Luft mit der übrigen Luft in der Fahrgastzelle gemischt.

Man könnte daran denken, im Kraftfahrzeug separate, mit einem eigenen Gebläse verbundene Belüftungsöffnungen vorzusehen. Das Gebläse könnte dann die verbrauchte Luft aus der Fahrgastzelle des Kraftfahrzeuges durch die separaten Belüftungsöffnungen absaugen. Eine solche Lüftungseinrichtung erfordert jedoch einen hohen baulichen Aufwand und Raum zum Verlegen von Lüftungskanälen.

Aus der gattungsgemäßen US-A-5,167,129 ist ein Klimatisierungssystem für ein Automobil bekannt, das im hinteren Bereich eines Fahrgastinnenraums des Automobils angeordnete Luftein- und -auslaßöffnungen sowie ein die Öffnungen beaufschlagendes Gebläse aufweist. In einer bestimmten, durch die Stellungen mehrerer in verschiedenen Kanälen angeordneter Klappen charakterisierten Betriebsart kann aus einem hinteren oberen Bereich des Fahrgastinnenraums Luft abgesaugt werden.

Weiterhin ist eine Belüftungseinrichtung aus der DE-A1-3 813 548 bekannt, die den Innenraum eines Fahrzeugs von durch Waschmittelkonzentrat sowie Flüssigkeitsanteile des Spritzstrahles einer Scheibenwaschanlage verunreinigte Luft vom Fahrzeuginnenraum fernhält.

Der Erfindung liegt das Problem zugrunde, eine Lüftungseinrichtung für ein Kraftfahrzeug so zu gestalten, daß sie verbrauchte Luft in der Nähe der Armaturentafel und/oder einer Mittelkonsole des Kraftfahrzeuges möglichst schnell absaugt und keinen hohen baulichen Aufwand erfordert.

Dieses Problem wird erfindungsgemäß dadurch gelöst, daß ein Teil der in oder an der Armaturentafel und/oder zumindest ein Teil von in einer Mittelkönsole angeordneten Belüftungsöffnungen mittels eines Ventils wahlweise mit der Saugseite oder der Druckseite des Gebläses verbindbar ist.

Durch diese Gestaltung sind entsprechend der Stellung des Ventils entweder alle Belüftungsöffnungen mit der Druckseite des Gebläses bzw. direkt mit der Frischluftöffnung oder ein Teil der Belüftungsöffnungen ist mit der Saugseite und die übrigen mit der Druckseite des Gebläses bzw. direkt mit der Frischluftöffnung verbunden. Hierdurch kann durch die mit der Saugseite des Gebläses verbundenen Belüftungsöffnungen verbrauchte Luft angesaugt und an den übrigen Belüftungsöffnungen ausgeblasen werden. Dabei entsteht in der Nähe der Armaturentafel und/oder der Mittelkonsole eine kleine Luftzirkulation, durch die die verbrauchte Luft im vorderen Bereich des Kraftfahrzeuges besonders schnell und nahezu ohne Verwirbelung mit der übrigen in der Fahrgastzelle vorhandenen Luft abgesaugt wird. Da kein zweites Gebläse oder zusätzliche Belüftungsöffnungen erforderlich sind, ist der bauliche Aufwand für die erfindungsgemäße Lüftungseinrichtung nur unwesentlich höher als für die bekannte Lüftungseinrichtung.

Ein Beschlagen von Seitenscheiben des Kraftfahrzeuges, welches durch ein Vorbeiströmen verbrauchter Luft entstehen könnte, wird zuverlässig verhindert, wenn die im mittleren Bereich der Armaturentafel und/oder die in der Mittelkonsole angeordneten Belüftungsöffnungen mit der Saugseite des Gebläses verbindbar sind. Weiterhin hat diese Gestaltung den Vorteil, daß verbrauchte Luft in der Nähe eines in der Armaturentafel oder einer Mittelkonsole angeordneten Aschenbechers bevorzugt abgesaugt wird.

Zum Filtern der Luft könnte jeweils ein Luftfilter für die Ansaugung vom Fußraum und für die Ansaugung von den Belüftungsöffnungen in der Armaturentafel und/oder in der Mittelkonsole eingesetzt werden. Die Lüftungseinrichtung gestaltet sich jedoch gemäß einer anderen vorteilhaften Weiterbildung der Erfindung besonders kostengünstig, wenn der Luftfilter unmittelbar vor oder nach dem Gebläse angeordnet ist.

Die Lüftungseinrichtung läßt sich gemäß einer anderen vorteilhaften Weiterbildung der Erfindung besonders einfach bedienen, wenn die mittlere Belüftungsöffnung, eine Belüftungsöffnung im Fußraum und eine an der Außenseite des Kraftfahrzeuges angeordnete Frischluftöffnung jeweils ein Ventil aufweisen, welche über eine gemeinsame Steuereinrichtung ansteuerbar sind. Hierdurch kann durch Betätigung eines einzigen Stellorgans, beispielsweise eines Hebels, wahlweise von außerhalb des Kraftfahrzeuges oder von einer Belüftungsöffnung in der Armaturentafel und/oder in der Mittelkonsole oder aus dem Fußraum Luft angesaugt werden.

Die Steuereinrichtung gestaltet sich gemäß einer anderen vorteilhaften Weiterbildung der Erfindung konstruktiv besonders einfach, wenn sie einen die Ventile miteinander koppelnden Bowdenzug hat.

Die Ventile könnten beispielsweise jeweils als einzeln zu öffnende Klappen ausgebildet sein. Die Lüftungseinrichtung erfordert jedoch gemäß einer anderen vorteilhaften Weiterbildung der Erfindung einen besonders geringen baulichen Aufwand und ist damit besonders kostengünstig herstellbar, wenn ein einziges Ventil zum wahlweisen Verbinden der mittleren Belüftungsöffnung, der Belüftungsöffnung im Fußraum oder der Frischluftöffnung mit der Saugseite des Gebläses ausgebildet ist.

Die Lüftungseinrichtung ist gemäß einer anderen vorteilhaften Weiterbildung der Erfindung besonders kostengünstig herstellbar, wenn mehrere Ventile ein gemeinsames Gehäuse mit einem gemeinsamen Schieber aufweisen. Weiterhin lassen sich mit dem Schieber besonders einfach Zwischenstufen erzeugen. Dank der Zwischenstufen kann man beispielsweise verbrauchte Luft durch eine der Belüftungsöffnungen absaugen und vor einer Rückführung in die Fahrgastzelle mit durch die Frischluftöffnung angesaugter Frischluft mischen.

Die erfindungsgemäße Lüftungseinrichtung gestaltet sich gemäß einer anderen vorteilhaften Weiterbildung der Erfindung konstruktiv besonders einfach, wenn die Saugseite des Gebläses über einen Bypasskanal mit einem von der Druckseite des Gebläses zu den Belüftungsöffnungen geführten Kanal verbunden ist und wenn das Ventil zum selbständigen Schließen des Kanals bei einem Unterdruck im Bypasskanal ausgebildet ist.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig. 1: einen Teilschnitt durch einen vorderen Bereich eines Kraftfahrzeuges mit einer erfindungsgemäßen Lüftungseinrichtung,
- Fig. 2: ein schematisches Schaltbild der erfindungsgemäßen Lüftungseinrichtung aus Figur 1,
- Fig. 3: ein Ventil aus Figur 2 mit einem gemeinsamen, drehbaren Schieber,
- Fig. 4: ein Schaltbild einer zweiten Ausführungsform der erfindungsgemäßen Lüftungseinrichtung,
- Fig. 5: eine Ansicht auf eine Belüftungsöffnung von der Position V aus Figur 4.

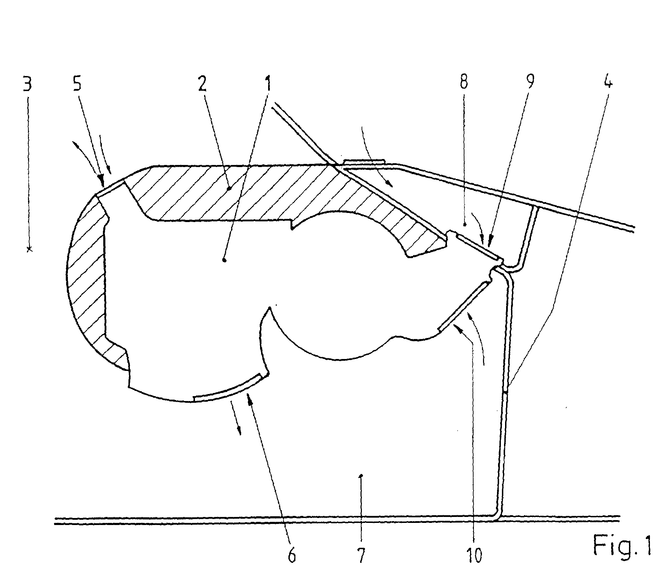

Die Figur 1 zeigt eine in einem Kraftfahrzeug befestigte Lüftungseinrichtung 1. Die Lüftungseinrichtung 1 ist in einer Armaturentafel 2 des Kraftfahrzeuges hinter einer eine Fahrgastzelle 3 nach vorne hin begrenzenden Stirnwand 4 angeordnet. Die Lüftungseinrichtung 1 hat eine im mittleren Bereich der Armaturentafel 2 angeordnete Belüftungsöffnung 5 und eine weitere Belüftungsöffnung 6, welche Luft in einen Fußraum 7 des Kraftfahrzeuges ausbläst. Durch die im mittleren Bereich der Armaturentafel 2 angeordnete Belüftungsöffnung 5 kann wahlweise Luft in die Fahrgastzelle 3 des Kraftfahrzeuges hineingeblasen werden oder aus dieser abgesaugt werden. Weiterhin hat die Lüftungseinrichtung 1 eine in einem vor der Stirnwand 4 befestigten Wasserkasten 8 angeordnete Frischluftöffnung 9 und eine Umluftöffnung 10. Die Frischluftöffnung 9 saugt Luft von der Außenseite des Kraftfahrzeuges an. Zur Verdeutlichung ist in der Zeichnung die Strömung der Luft mit Pfeilen gekennzeichnet. Durch die Umluftöffnung 10 wird von der Lüftungseinrichtung 1 Luft aus dem Fußraum 7 des Kraftfahrzeuges angesaugt.

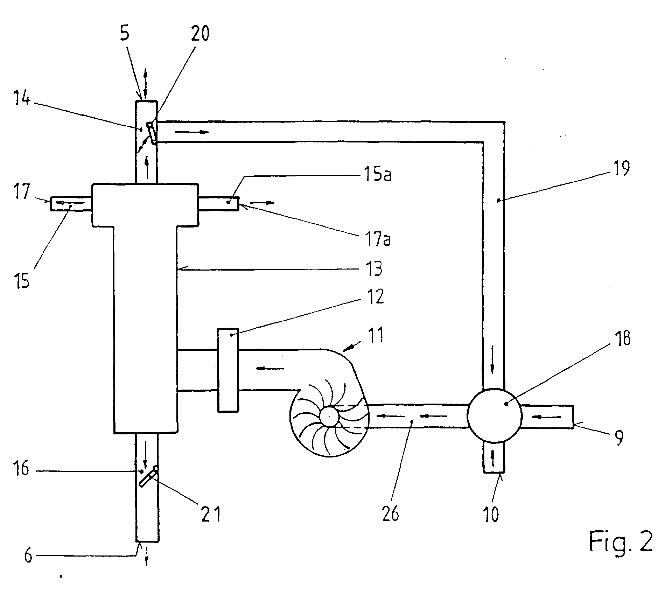

Die Figur 2 zeigt schematisch die erfindungsgemäße Lüftungseinrichtung 1 aus Figur 1. Die Lüftungseinrichtung 1 hat ein Gebläse 11 und ein an der Druckseite des Gebläses 11 hinter einem Luftfilter 12 angeordneten Luftverteilkasten 13. Von dem Luftverteilkasten 13 führt jeweils ein Kanal 14 - 16 zu der mittleren Belüftungsöffnung 5 und zu zwei seitlichen Belüftungsöffnungen 17, 17a in der Armaturentafel 2 und zu der im Fußraum 7 des Kraftfahrzeuges angeordneten Belüftungsöffnung 6. Weiterhin hat die Lüftungseinrichtung 1 ein Ventil 18, mit welchem sich die Saugseite des Gebläses 11 mit der mittleren Belüftungsöffnung 5, der Umluftöffnung 10 oder der Frischluftöffnung 9 verbinden läßt. Die mittlere Belüftungsöffnung 5 ist mittels eines Bypasskanals 19 mit dem Ventil 18 verbunden.

Die mittlere Belüftungsöffnung 5 ist mittels eines als Umschaltklappe ausgebildeten Ventils 20 von einem Saugbetrieb auf einen Ausblasbetrieb umschaltbar. Die Belüftungsöffnung 6 im Fußraum 7 ist mittels eines weiteren Ventils 21 verschließbar. Dies kann genutzt werden, um einen Strömungskurzschluß von der Belüftungsöffnung 6 im Fußraum 7 zu der Umluftöffnung 10 zu vermeiden. Durch ein Schalten des als Umschaltklappe ausgebildeten Ventils 20 auf Saugbetrieb der mittleren Belüftungsöffnung 5 und durch eine Verbindung der mittleren Belüftungsöffnung 5 mit der Saugseite des Gebläses 11 durch das Ventil 18 entsteht im mittleren Bereich der Armaturentafel 2 eine kleine Luftzirkulation, durch welche verbrauchte Luft aus einem vorderen Bereich der Fahrgastzelle 3 des Kraftfahrzeuges abgesaugt wird.

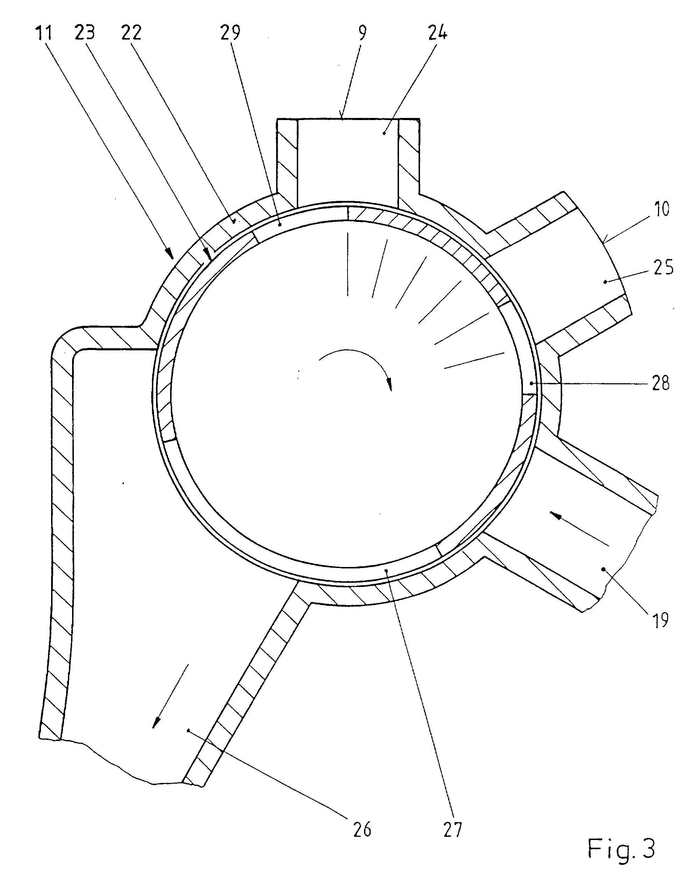

Das Ventil 18 aus der Figur 2 ist schematisch in Figur 3 dargestellt. Das Ventil 18 hat ein Gehäuse 22, in welchem ein trommelförmiger Schieber 23 drehbar gelagert ist. Das Gehäuse 22 wird von einem zu der Frischluftöffnung 9 führenden Frischluftkanal 24, von einem zu der Umluftöffnung 10 im Fußraum 7 des Kraftfahrzeuges führenden Umluftkanal 25, von dem Bypasskanal 19 und von einem zu der Saugseite des Gebläses 11 führenden Kanal 26 durchdrungen. Der Schieber 23 hat drei Öffnungen 27 - 29. Die Öffnung 27 ermöglicht ein Überströmen von Luft von dem Zentrum des Ventils 18 zur Saugseite des Gebläses 11. Die anderen beiden Öffnungen 28, 29 steuern den Frischluftkanal 24, den Umluftkanal 25 und den Bypasskanal 19.

In der eingezeichneten Grundstellung des Ventils 18 sind der Frischluftkanal 24 und der Umluftkanal 25 durch zwei der Öffnungen 28, 29 des Schiebers 23 jeweils zur Hälfte geöffnet. Luft wird damit jeweils zur Hälfte von der Umluftöffnung 10 und der Frischluftöffnung 9 angesaugt. Bei einer Drehung des Schiebers 23 um 15° im Uhrzeigersinn ist der Umluftkanal 25 geschlossen und der Frischluftkanal 24 vollständig geöffnet. Dreht man den Schieber 23 im Uhrzeigersinn weiter, wird der Frischluftkanal 24 geschlossen und gleichzeitig der Bypasskanal 19 geöffnet. Der Bypasskanal 19 ist bei einer Drehung des Schiebers 23 um 45° vollständig geöffnet, während der Frischluftkanal 24 und der Umluftkanal 25 geschlossen sind. Bei einer weiteren Drehung des Schiebers 23 wird der Bypasskanal 19 geschlossen, während gleichzeitig der Umluftkanal 25 geöffnet wird, bis er bei einer Verdrehung des Schiebers 23 um 75° vollständig geöffnet ist.

Mit diesem Ventil 18 lassen sich jeder der Kanäle 19, 24, 25 einzeln mit der Saugseite des Gebläses 11 verbinden und sämtliche Zwischenstufen zum Mischen der angesaugten Luft erzeugen. Das in Figur 2 dargestellte, als Umschaltklappe ausgebildete Ventil 20 zur Steuerung der mittleren Belüftungsöffnung 5 und das ebenfalls in Figur 2 dargestellte Ventil 21 zur Steuerung der Belüftungsöffnung 6 im Fußraum 7 aus Figur 1 können beispielsweise automatisch von einem Unterdruck in dem Umluftkanal 25 und dem Bypasskanal 19 gesteuert werden.

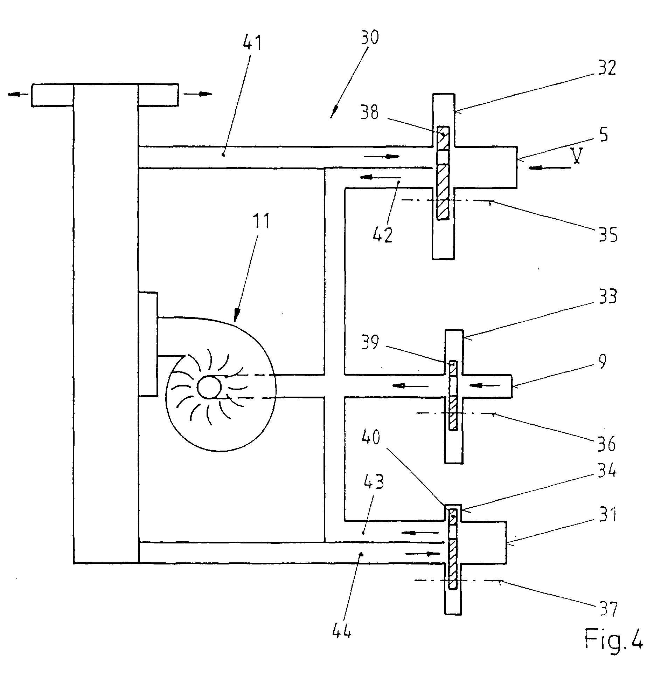

Die Figur 4 zeigt schematisch eine Lüftungseinrichtung 30, bei der die mittlere Belüftungsöffnung 5, die Frischluftöffnung 9 und eine Öffnung 31 im in Figur 1 dargestellten Fußraum 7 von jeweils einem Ventil 32 - 34 ansteuerbar sind. Die Ventile 32 - 34 weisen jeweils einen um eine Achse 35 - 37 schwenkbaren Drehschieber 38 - 40 auf. Zu den Ventilen 32, 34 der mittleren Belüftungsöffnung 5 und der Öffnung 31 im Fußraum führen jeweils ein Kanal 41 - 44 von der Druckseite und der Saugseite des Gebläses 11.

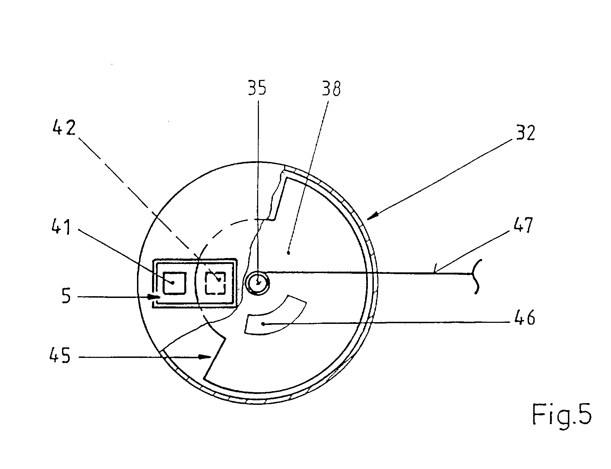

Das Ventil 32 der mittleren Belüftungsöffnung 5 ist in einem Teilschnitt in Figur 5 dargestellt. Der Drehschieber 38 hat zur Steuerung der Kanäle 41, 42 einen Rand 45 und ein Langloch 46. Durch ein Verdrehen des Drehschiebers 38 kann damit wahlweise der mit der Druckseite verbundene Kanal 41 oder der mit der Saugseite verbundene Kanal 42 mit der Belüftungsöffnung 5 verbunden werden, oder es lassen sich beide Kanäle 41, 42 gleichzeitig verschließen. Der Drehschieber 38 läßt sich mit einem Bowdenzug 47 verstellen. Die in Figur 4 gezeigten Ventile 32, 34 können beispielsweise mit einem gemeinsamen oder mit jeweils einem eigenen Bowdenzug angesteuert werden.

## Patentansprüche

1. Lüftungseinrichtung für ein Kraftfahrzeug mit einem Luftfilter (12), mit einem Gebläse (11) und mit mehreren, mit dem Gebläse verbindbaren, zur Belüftung des Kraftfahrzeuges vorgesehenen Belüftungsöffnungen (5), welche in einem mittleren Bereich und in einem seitlichen Bereich einer Armaturentafel (2) angeordnet sind, **dadurch gekennzeichnet, daß** ein Teil der in oder an der Armaturentafel (2) und/oder zumindest ein Teil von in einer Mittelkonsole angeordneten Belüftungsöffnungen (5) mittels eines Ventils (18, 20, 32) wahlweise mit der Saugseite oder der Druckseite des Gebläses (11) verbindbar ist.

2. Lüftungseinrichtung nach Anspruch 1, **dadurch gekennzeichnet, daß** die im mittleren Bereich der Armaturentafel (2) und/oder die in der Mittelkonsole angeordneten Belüftungsöffnungen (5) mit der Saugseite des Gebläses (11) verbindbar sind.

3. Lüftungseinrichtung nach Anspruch 1 oder 2, **dadurch gekennzeichnet, daß** der Luftfilter (12) unmittelbar vor oder nach dem Gebläse (11) angeordnet ist.

4. Lüftungseinrichtung nach zumindest einem der vorhergehenden Ansprüche, **dadurch gekennzeichnet, daß** die mittlere Belüftungsöffnung (5), eine Öffnung (31) im Fußraum (7) und eine an der Außenseite des Kraftfahrzeuges angeordnete Frischluftöffnung (9) jeweils ein Ventil (32 - 34) aufweisen, welche über eine gemeinsame Steuereinrichtung ansteuerbar sind.

5. Lüftungseinrichtung nach Anspruch 4, **dadurch gekennzeichnet, daß** die Steuereinrichtung einen die Ventile (32 - 34) miteinander koppelnden Bowdenzug (47) hat.

6. Lüftungseinrichtung nach zumindest einem der vorhergehenden Ansprüche, **dadurch gekennzeichnet, daß** ein einziges Ventil (18) zum wahlweisen Verbinden der mittleren Belüftungsöffnung (5), der Belüftungsöffnung (6) im Fußraum (7) oder der Frischluftöffnung (9) mit der Saugseite des Gebläses (11) ausgebildet ist.

7. Lüftungseinrichtung nach zumindest einem der vorhergehenden Ansprüche, **dadurch gekennzeichnet, daß** mehrere Ventile ein gemeinsames Gehäuse (22) mit einen gemeinsamen Schieber (23) aufweisen.

8. Lüftungseinrichtung nach zumindest einem der vorhergehenden Ansprüche, **dadurch gekennzeichnet, daß** die Saugseite des Gebläses (11) über einen Bypasskanal (19) mit einem von der Druckseite des Gebläses (11) zu den Belüftungsöffnungen (5) geführten Kanal (14) verbunden ist und daß das Ventil (20) zum selbständigen Schließen des Kanals (14) bei einem Unterdruck im Bypasskanal (19) ausgebildet ist.

## Claims

1. Ventilation device for a motor vehicle, having an air filter (12), having a fan (11) and having a plurality of ventilation openings (5) which can be connected to the fan, are intended for ventilating the motor vehicle and are arranged in a central region and a lateral region of a dashboard (2), **characterized in that** some of the ventilation openings (5) arranged in or on the dashboard (2) and/or at least some of the ventilation openings (5) arranged in the central console can be connected either to the suction side or the discharge side of the fan (11) by means of a valve (18, 20, 32).

2. Ventilation device according to Claim 1, **characterized in that** the ventilation openings (5) which are arranged in the central region of the dashboard (2) and/or the ventilation openings (5) which are arranged in the central console can be connected to the suction side of the fan (11).

3. Ventilation device according to Claim 1 or 2, **characterized in that** the air filter (12) is arranged directly upstream or downstream of the fan (11).

4. Ventilation device according to at least one of the preceding claims, **characterized in that** the central ventilation opening (5), an opening (31) in the foot well (7) and a fresh air opening (9) arranged on the outside of the motor vehicle each have valves (32-34) which can be activated via a common control device.

5. Ventilation device according to Claim 4, **characterized in that** the control device has a Bowden cable (47) coupling the valves (32-34) to one another.

6. Ventilation device according to at least one of the preceding claims, **characterized in that** a single valve (18) is constructed for optionally connecting the central ventilation opening (5), the ventilation opening (6) in the foot well (7) or the fresh air opening (9) to the suction side of the fan (7).

7. Ventilation device according to at least one of the preceding claims, **characterized in that** a plurality of valves have a common housing (22) having a common slide (23).

8. Ventilation device according to at least one of the preceding claims, **characterized in that** the suction side of the fan (11) is connected via a bypass duct (19) to a duct (14) guided from the discharge side of the fan (11) to the ventilation openings (5), and **in that** the valve (20) is designed to automatically close the duct (14) when there is a negative pressure in the bypass channel (19).

## Revendications

1. Dispositif de ventilation pour véhicule automobile, comprenant un filtre à air (12), un ventilateur (11) et plusieurs ouvertures de ventilation (5) prévues pour la ventilation du véhicule automobile, aptes à être reliées au ventilateur et disposées dans une région centrale et dans les régions latérales d'un tableau de bord (2), **caractérisé en ce qu'**une partie des ouvertures de ventilation (5) disposées dans ou sur le tableau de bord (2) et/ou dans une console centrale peuvent être reliées sélectivement au moyen d'un clapet (18, 20, 32) au côté aspiration ou au côté refoulement du ventilateur (11).

2. Dispositif de ventilation selon la revendication 1, **caractérisé en ce que** les ouvertures de ventilation (5) disposées dans la partie centrale du tableau de bord (2) et/ou dans la console centrale peuvent être reliées au côté aspiration du ventilateur (11).

3. Dispositif de ventilation selon la revendication 1 ou 2, **caractérisé en ce que** le filtre à air (12) est disposé immédiatement en amont ou en aval du ventilateur (11).

4. Dispositif de ventilation selon au moins l'une des revendications précédentes, **caractérisé en ce que** l'ouverture centrale de ventilation (5), une ouverture (31) dans l'espace (7) prévu pour les pieds et une ouverture (9) d'air frais disposée du côté extérieur du véhicule automobile présentent chacune un clapet (32 - 34), ces clapets pouvant être commandés par un dispositif de commande commun.

5. Dispositif de ventilation selon la revendication 4, **caractérisé en ce que** le dispositif de commande possède un câble Bowden (47) qui accouple les clapets (32 - 34) les uns aux autres.

6. Dispositif de ventilation selon au moins l'une des revendications précédentes, **caractérisé ce qu'**un unique clapet (18) est configuré pour le raccordement sélectif de l'ouverture centrale de ventilation (5), de l'ouverture de ventilation (6) dans l'espace (7) prévu pour les pieds et de l'ouverture d'air frais (9) au côté aspiration du ventilateur (11).

7. Dispositif de ventilation selon au moins l'une des revendications précédentes, **caractérisé en ce que** plusieurs clapets présentent un boîtier (22) commun avec un coulisseau (23) commun.

8. Dispositif de ventilation selon au moins l'une des revendications précédentes, **caractérisé en ce que** le côté aspiration du ventilateur (11) est relié par l'intermédiaire d'un canal de dérivation (19) à un canal (14) qui conduit du côté refoulement du ventilateur (11) aux ouvertures de ventilation (5), et **en ce que** le clapet (20) est configuré pour fermer automatiquement le canal (14) en cas de dépression dans le canal de dérivation (19).
